# EUROPEAN PATENT APPLICATION

(11) **EP 3 598 410 A1**
(43) Date of publication of application: **22.01.2020**
(21) Application number: 19186689.6
(22) Date of filing: 17.07.2019
(51) Int. Cl.: G08G 1/00, G06Q 10/00, B65F 1/14, B65F 3/00

(54) **IMPROVED APPARATUS AND METHOD FOR A VEHICLE FLEET MANAGEMENT**

(30) Priority: 19.07.2018 IT 201800007354
(71) Applicant: Checkme Ltd, London W1B 3HH (GB)
(72) Inventor: BRIVIO, Marco, 23879 Verderio (LC) (IT)
(74) Representative: Ferrari, Barbara

(57) **Abstract**

Apparatus (1) for managing a fleet of vehicles (10), each vehicle (10) comprising at least one work equipment (3), the apparatus (1) being on board a vehicle (10) of the fleet and comprising a geolocation system (4), for detecting the position of the vehicle (10); a structure-side interface system (5) connected to the vehicle (10), for monitoring the activity of the vehicle (10); a load-side interface system (6) connected to the equipment (3), for monitoring the activity of the equipment (3) of the vehicle (10); a system of automatic identification and storage of object information (7), for detecting and identifying objects by means of the apparatus (1); and a network connectivity system (8) to allow data of the apparatus (1) to be transmitted. The structure-side interface system (5) is connected to load-side interface system (6), geolocation system (4) and system of automatic identification and storage of object information (7), for generating a coherent data identifying an operating state of the vehicle (10), wherein coherent data means a set of data which are detected at the same time and interconnected between the structure-side interface system (5), the load-side interface system (6) and the system of automatic identification and storage of object information (7), which are comprised in the apparatus, in addition to positioning data obtained through the geolocation system (4), the coherent data comprising crossed information detected by the systems (5, 6, 4, 7). The coherent data is sent through the network connectivity system (8).

## Description

### Field of application

The present invention refers to an apparatus for a vehicle fleet management comprising a work equipment.

The invention refers in particular, but not only, to an apparatus dedicated to vehicles used for waste collection, whose work equipment comprises handling and manoeuvring means for waste collection, a geolocation system, a system for monitoring the activity of the vehicle, a system for monitoring the activity of the equipment, a system for detecting and identifying objects by means of the apparatus, and a network connectivity system.

### Prior art

The sector of the present invention is the one of vehicles organized in fleets centrally managed in a more or less automatic way.

More specifically, the sector to which this invention is mostly, but not only, addressed, is the one of vehicles adopted for carrying out a public service and, even more specifically, for waste collection and environmental hygiene.

However, as it will be apparent below, it is also possible to adopt the present invention with minimal variations for different services which provide for the use of a fleet of vehicles.

In fact, it is also possible to implement the present invention in areas such as the transport of refrigerated products or in the cultivation of fields, or further in the vehicles for a warehouse management, since this invention is, as mentioned, suitable for any classes of vehicles which use a work equipment.

In such sectors, especially in case of fleets with a considerable number of vehicles, the presence of a centralized control room is common, from which it is possible to see and control the proper operation of various vehicles of each fleet and to control that the job or task assigned thereto will be punctually and properly carried out.

There is in particular a strong need for receiving data concerning both the vehicle and one or more of the equipment transported thereby, in general at least the equipment involved in the main task of the vehicle itself, as well as other data concerning a load of such a vehicle or data concerning a path followed thereby while carrying out its task, for example, in case of waste collection, the total waste loaded weight or the number of waste collection points along a particular path so as to estimate the possible load of a vehicle along such a path.

Furthermore, a need for organizing a set of paths for the vehicles of the fleet under management is evident, in particular in order to optimize time and costs, while guaranteeing that the fleet as a whole will carry out its task, for example guaranteeing a thorough waste collection in the area covered by such a fleet.

Still, a legislation-linked specific need of the environmental hygiene sector is to transmit various collected data to a responsible certification body, which may verify the management of the public service and the compliance with all relevant legal requirements.

For this reason, different systems are currently used on board the vehicles using a work equipment, for example designed for waste collection, each adapted to detect a data which is relevant to control the various steps of handling and manoeuvring by means of the fleet, or of diagnosing possible malfunctions of the vehicles or equipment thereof.

However, although the various known systems generate a fair amount of relevant data, they are incomplete for a comprehensive and systematic evaluation of the vehicle fleet operation as a whole and are further of complex management by means of a reception central station since they are partial data and they are not connected both from the point of view of the reported information and the type of data output by each system on board each vehicle.

Therefore, it would be desirable to have a system which monitors all steps of the operation of each vehicle of the fleet, being also able to cross the various detected data in order to generate a control and a more complete verification of the steady operation of each vehicle, as well as of the fleet as a whole, and to output them as a coherent data to a reception central station or a dedicated receiving system.

Therefore, the technical problem of the present invention is the one to provide an integrated apparatus which is able to verify, confirm and optimize the operation for a vehicle fleet management with an equipment, for example vehicles adapted to waste collection.

Further purpose is to provide an apparatus which is functional for certifying a carried-out service by means of a certification body.

Still further purpose of the present invention is to provide an adaptive apparatus which is able to analyse the operation over time of the vehicles while providing for possible malfunctions even in advance.

Still further purpose is to provide an apparatus which guarantees a quick response to unsteady conditions in order to guarantee the safety of both the operator on board the vehicle and the vehicle itself.

Purpose of the invention is also to provide an apparatus which may be integrated into the vehicles of pre-existing fleets without the need for excessive technical integration complications.

Finally, purpose is to provide an optimized fleet management method based on a unique set of coded data which guarantees the operation under all conditions provided for the vehicles of the fleet.

### Summary of the invention

The solution idea to achieve the intended purposes is to provide a unique apparatus on board a vehicle and which is able to incorporate a plurality of systems, while integrating them together in order to get unique information on the global operating state of the vehicle itself to send to a responsible centralized receiver.

Based on such a solution idea, the technical problem is solved by an apparatus for a vehicle fleet management, each vehicle comprising a work equipment, such an apparatus comprising a geolocation system for detecting the position of the vehicle, a structure-side interface system connected to the vehicle, for monitoring the activity of the vehicle, a load-side interface system connected to the equipment, for monitoring the activity of such an equipment of the vehicle, a system of automatic identification and storage of object information, for detecting and identifying objects by means of the apparatus, a network connectivity system to allow data to be transmitted from such an apparatus. In such an apparatus, the structure-side interface system is connected to the load-side interface system, the geolocation system and the system of automatic identification and storage of object information, for generating a coherent data identifying an operating state of the vehicle, wherein coherent data means a set of data which are detected at the same time and interconnected between the structure-side interface system, the load-side interface system and the system of automatic identification and storage of object information, which are comprised in the apparatus, in addition to positioning data obtained through the geolocation system. Such a data therefore comprises crossed information detected by such systems and is sent through the network connectivity system.

According to a particular aspect of the invention, the vehicles of said fleet are designed for an environmental hygiene management and the work equipment comprises handling and manoeuvring means for waste collection.

In a different way, in other scopes comprised in the present invention, the work equipment may be represented, for example, by a refrigerating structure comprising actuators and cooling pumps, whose operation, together with the one of the vehicle on which such an equipment is mounted, must be constantly and globally monitored in order to avoid unwanted thawing in case of, for example, failure to supply the vehicle to the refrigerating structure.

Another case of vehicle comprising an equipment according to the present invention is in agricultural vehicles, which need a constant monitoring of the movement of the various vehicles, for example for optimizing a usage of pesticides, in particular according to the latest evolutions of the so-called "agriculture 4.0" in large plantations.

Still, a specific case may be represented by small handling vehicles inside big warehouses, comprising gripping and lifting means which may run into malfunctions, on which it is possible to get information through the present invention in order to promptly intervene and save time.

According to another aspect of the invention, such a coherent data may comprise information of carried-out waste collection, weight on board and position of the vehicle, operation of the work equipment and steady operation of the apparatus and vehicle.

According to one particular aspect of the invention, the system of automatic identification and storage of object information may be a system with radiofrequency identification (RFID) one-way technology comprising tags detected through suitable readers.

Through such a system, it is possible to detect the approximation of the vehicle, on which the Reader is positioned, to the waste container, on which the Tag is placed, for verifying the carried-out collection.

In a preferred embodiment, the system of automatic identification and storage of object information may be a system with near field communication (NFC) two-way technology comprising a peer-to-peer network. Such a technology is more efficient for verifying the carried-out collection since it is a solution operating at very short range, shorter than the one with RFID, thus guaranteeing a proximity of vehicle and waste container such that it is only possible in a step of collecting.

According to a particular aspect of the present invention, a data transmission system may be further provided. Through the implementation of such a system, also the communication between the vehicles is possible in addition to the communication of data between each vehicle and an external reception central station. In such a case, it is also possible to adopt a master/client configuration with a main vehicle which a set of secondary vehicles refers to.

In a particular embodiment, the data transmission system may be a Wi-Fi system.

In a further embodiment, the data transmission system may be a system of the Bluetooth type.

In a further embodiment, the data transmission system may be a system of the Long Range (LORA) type.

Furthermore, according to a preferred aspect, the apparatus may adopt a network connectivity system with 4G standard and related so-called "Narrow Band" (NB) implementation. Such a system guarantees a signal stability while sending a considerable amount of data, avoiding situations of traffic congestion and information loss. Furthermore, this system supports also possible operation anomalies. The system is therefore a bit oversized as compared to how much it would be needed for a standard operation, thereby giving a certain band tolerance which guarantees a constant continuous operation.

According to a further aspect of the invention, the apparatus may also comprise expansion slots to allow additional functionalities and update functions for the fleet apparatus to be implemented. A customization of the apparatus according to specific needs is thereby possible without structurally intervene on the apparatus. Furthermore, considering the continuous evolutions of the interface and connection systems, it is possible to provide for an apparatus update to the most evolved standards, thus making the apparatus functional and not obsolete for a considerable time. It is evident that this is economically desirable.

According to another aspect of the invention, the geolocation system may be interfaced with an accelerometer of the vehicle for detecting a path under an estimated navigation condition.

In particular, the apparatus therefore allows adopting a so-called "dead reckoning" navigation or "estimated navigation", through which the problem of the canyon effect is avoided, which is especially generated when the vehicles pass through narrow alleys and lose the signal. An estimated navigation allows continuing a calculation of a path of the vehicle, based on the latest information detected from the geolocation system and based on the information got from accelerometers on board the vehicle, path which is sent when connection and geolocation are reactivated.

According to a further aspect of the present invention, the structure-side interface system may carry out a data reading through a Fieldbus Message Specification (FMS) protocol. Such a solution allows reducing the required wiring between the nodes constituting the network, since it requires the positioning of a single cable.

In a different aspect of the invention, the structure-side interface system may carry out a data reading through a European On-Board Diagnostic (EOBD) auto-diagnostic protocol. Such a system provides information on the state of the various subsystems of the vehicle to the operator.

Through such a data reading, also a predictive diagnostic on the vehicle is further possible by analysing the stress which it is subjected to and detecting possible malfunctions or breakages before they occur, thereby avoiding a number of drawbacks.

Furthermore, in a preferred aspect of the invention, the apparatus may comprise an artificial neural network adapted to assimilate data concerning a driving style of each driving operator of the vehicles of the fleet. Thanks to this artificial neural network and this data assimilation, it is possible to carry out an analysis for evaluating the optimum also with regards to the consumptions, and thanks to this analysis, it is possible to define a new driving standard.

Still according to a preferred aspect of the invention, the apparatus may comprise an image and video capture system of external conditions and internal conditions of the vehicle of the fleet. Thanks to this additional system, in case, for example, of a collision with another vehicle, the video at the moment immediately prior to the collision is immediately sent to the reception central station, which is therefore able to determine the causes of the collision, further guaranteeing that the information will not be violated, thereby remaining on storage systems on board the vehicle.

Furthermore, a preferred embodiment of the invention may comprise a high-permeability radio transmission and reception system. Thanks to such a system, it is possible to carry out data readings inside a house for still optimizing the handling of the vehicles in the path for waste collection.

According to a preferred embodiment, such a high-permeability radio transmission system may adopt a Long Range (LoRa) protocol, protocol which combines high performance and high reliability.

According to a further aspect of the invention, the system further comprises a connection port with an alarm sensor, preferably in form of a button, activatable by an operator adapted to send an alarm condition to a reception central station.

The present invention is further related to a method for a vehicle fleet management comprising the following steps:
- locating the position of each of the vehicles, through a geolocation system on board the vehicles;
- identifying an operating state of the vehicle between a plurality of expected operating states, through a structure-side interface system connected to a load-side interface system and a system of automatic identification and storage of object information on board the vehicles;
- generating a coded coherent data for the operating state, wherein coherent data means a set of data which are detected at the same time and interconnected between the structure-side interface system, the load-side interface system and the system of automatic identification and storage of object information, which are comprised in the apparatus, in addition to positioning data obtained through the geolocation system;
- sending the coded coherent data through a network connectivity system.

Such a method, while allowing generating a unique coherent data containing all sets of needed information, which give a complete overview on the state of each vehicle when they are crossed together, allows having a 360°-degree view of the fleet and facilitating the verification and optimization process of the provided service.

Furthermore, in a preferred aspect, the method may comprise a step of verifying the operating state compared to a planned steady state adapted to determine altered operations or malfunctions of the vehicle.

Furthermore, according to a further aspect, the method may comprise a step of acquiring and analysing a driving style of the driving operator of the vehicle. This step allows, as mentioned above, detecting an optimum driving style for minimizing consumptions and wear of the vehicles of the fleet.

Still further, according to a preferred aspect, the method may comprise a step of automatically sending a video of external conditions and internal conditions of the vehicle detected by an image and video capture system, in case of detection of an unsteady condition of said vehicle. For example, such a sending is carried out in case of collision with another vehicle.

Finally, according to another preferred aspect, the method may comprise a step of storing the coherent data on Cloud. A storing of this type avoids the overuse of dedicated physical memories.

The characteristics and advantages of the apparatus for a vehicle fleet management and the method for a vehicle fleet management according to the present invention will become more apparent from the following description of an exemplary embodiment thereof, given by way of a non-limiting example with reference to the appended drawings.

### Brief description of the drawings

- Figure 1 depicts a schematic view of the apparatus according to the present invention;
- Figure 2 depicts an example of operation of the apparatus of Figure 1;
- Figure 3 depicts a further example of operation of the apparatus of Figure 1;
- Figure 4 depicts a scheme of the method according to the present invention;
- Figure 5 depicts an exemplary output of the apparatus according to the present invention.

### Detailed description

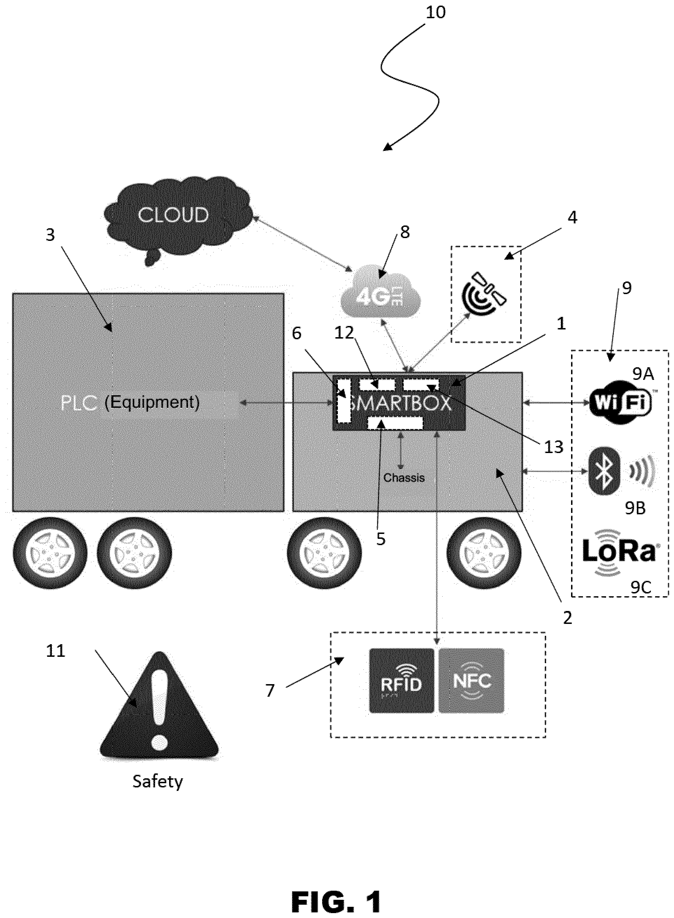

With reference to the figures and in particular to Figure 1, an apparatus for a vehicle fleet management provided according to the present invention is globally and schematically designated with 1.

The apparatus 1 provides an equipment 3 connected to a chassis 2 of a vehicle 10 of the fleet. The equipment 3 comprises handling and manoeuvring means for waste collection. The equipment 3 may comprise, for example, a waste storage tank, a lifting means of a waste container, a crane, a two-axis or three-axis compactor. These are obviously exemplary and non-limiting embodiments of the equipment 3 of a vehicle of the fleet described in the present invention. For example, according to a different embodiment, the work equipment 3 may provide a refrigerating system comprising actuators and cooling pumps. Differently, in a further embodiment, the work equipment 3 may provide handling and lifting means for agriculture. It is also possible to provide that the equipment 3 of the vehicle comprises means suitable for grabbing and moving goods of various kinds, such as for example in a large warehouse.

Furthermore, the apparatus 1 comprises a geolocation system 4 adapted to detect the position of the vehicle 10 which has on board such an apparatus 1.

In a preferred embodiment, the geolocation system 4 is suitable for automotive applications and is thus further interfaced with the accelerometers (not shown) which are on board the vehicle 10. Such an interfacing particularly allows avoiding the drawback of the so-called canyon effect, which is generated in narrow streets and alleys situated among very high structures which disturb the signal and stop the detection of data carried out from the system. By connecting with the accelerometers of the vehicle 10, the geolocation system 4 is able to continue calculating the path carried out up to the moment when the signal is retrieved, with a following reconstruction of the whole carried-out path (so-called "dead reckoning" or "estimated navigation") and without losing significant data.

Furthermore, the apparatus 1 comprises a structure-side interface system 5 connected to the chassis 2 of the vehicle 10 and monitoring the operating steps thereof. In the same way, the apparatus 1 comprises a load-side interface system 6 connected to the equipment 3, also in this case for monitoring the operating steps thereof.

Among the information monitored with regard to the load-side interface system 6, a very significant one is the weight on board and the variations of such a weight. Through this detection, it is particularly possible to detect a weight variation at various positions of the path followed by the vehicle 10, as detected by the geolocation system 4, and to verify if the variation is or is not provided with regard to that particular path. Furthermore, it is thereby possible to detect positions or paths which requires a strengthening of the service when a maximum weight value of the vehicles 10 dedicated to such positions and paths is exceeded.

The data reading by means of the structure-side interface 5 in a preferred embodiment is carried out through a Fieldbus Message Specification (FMS) protocol, based on a model of the Client-Server type for communicating between the various devices.

In an alternative embodiment, an auto-diagnostic protocol known as European On-Board Diagnostic (EOBD) is adopted.

Both designated protocols provide a good standardization level and allow reading mileage, continuous operation times, speed, instantaneous consumption, readings of motor parameters of a vehicle 10. The FMS protocol further allows detecting the fuel level of the vehicle 10.

Differently, there is not a standardization in terms of transmission protocol for the load-side interface system 6 and it is possible to configure it through a software in order to provide the various types of equipment 3 provided by each producer of the vehicles 10.

Thanks to such a data reading, it is also possible to carry out a predictive diagnostic operation of the damages which each vehicle 10 may be subjected to, based on the detected stress.

For detecting the waste containers during a step of collecting, the apparatus 1 further provides a system of automatic identification and storage of object information 7, which is hereafter designated as identification system 7.

According to one embodiment of the present invention, the identification system 7 is a system with radiofrequency identification (RFID) one-way technology. Such a technology provides putting a so-called RFID tag on each waste container and a RFID reader of such RFID tags being on board the vehicle 10.

According to a preferred embodiment, the identification system 7 is a system with near field communication (NFC) two-way technology comprising a peer-to-peer network and NFC tag. Such an embodiment is preferable for defining the actual carried-out waste collection from each container with greater certainty, since the operation is at very short range and the detection could not occur only through a passage of the vehicle near the waste container and the related NFC tag.

Nothing prevents adopting both technologies on board the vehicle or a different technology which is able to detect the proximity of the vehicle 10 and consequently of the equipment 3 relative to a waste container, alternatives which are comprised in the scope of protection defined by means of the appended claims.

Furthermore, the apparatus 1 comprises a network connectivity system 8.

In a preferred embodiment, the network connectivity system 8 is a system with technology of the 4G type. The 4G technology allows dealing with all possible network needs, thus overcoming the problems linked to a network transmission congestion and those due to the number of data to be transmitted, which increase in number in case of anomalous behaviour of the apparatus 1. In other words, the network connectivity system 8 preferably adopts the 4G technology which is often oversized with regard to a standard operation of the apparatus 1, so as to guarantee a continuous operation under almost all operating conditions, both external conditions and internal conditions of the apparatus 1 itself.

The network connectivity system 8 may be also represented by a local network between the various vehicles 10 of the fleet.

In the present embodiment, the apparatus 1 further comprises a data transmission system 9.

Such a data transmission system 9 in the present embodiment is a Wi-Fi data transmission system 9A.

In an alternative embodiment, a Bluetooth data transmission system 9B is used.

Nothing prevents arranging the system for working through both technologies or with different alternative technologies.

In particular, it is possible to adopt a Wi-Fi data transmission system 9A for sending information at medium range and a Bluetooth data transmission system 9B for sending information at short range, for example between apparatus 1 and operator of the vehicle, which is connected through a display interface (not shown) or through a dedicated app. For example, it is possible for the operator to interface with the vehicle in a step of opening, closing and managing the vehicle 10 and the equipment 3.

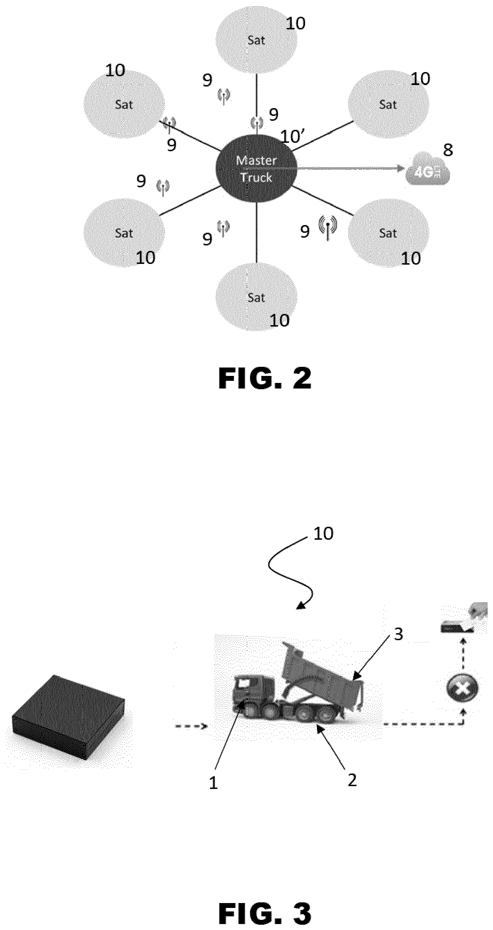

In case of network connectivity system 8 of the local type between the various vehicles 10 of the fleet, the data transmission system 9 allows mutually connecting the vehicles 10 of the fleet through an architecture of the master/client type, as schematically shown in Figure 2. In particular, the fleet may comprise small sized vehicles for collecting a lower amount of waste. Such small sized vehicles or "client" vehicles 10 may interface through the data transmission system 9 inside the network connectivity system 8 with a "master" vehicle 10', which is adapted to send every information, also referring to the "client" vehicles, to a central station, thus obtaining an optimized distribution of the tasks and a saving also in terms of global network implementations on all vehicles of the fleet. In an alternative embodiment, it is further possible to arrange a network connectivity system 8 comprising fixed hotspot connection points (not shown), to which the various "client" vehicles may connect for transmitting data.

In the present embodiment, the apparatus 1 further comprises an artificial neural network 12. Such an artificial neural network 12 may be set in back-forward or may be adaptive and is adapted to detect a driving style of each operator, for a subsequent optimization analysis of the consumptions of the related vehicle 10.

In the present embodiment, an image and video capture system 13 is further provided. It is therefore also possible to remotely video-monitor internal and external conditions of the vehicle 10. Furthermore, the image and video capture system 13 is connected to the network connectivity system 8, so that, in case of a possible external problem, for example a collision of the vehicle, the image and video capture system 13 sends an immediate proof of the event to a reception central station, for carrying out a quick analysis of the operations to be undertaken, for example considering the need for an intervention of an ambulance or the fire department, and for also having a non-violable proof, since it does not remain in an possible memory inside the vehicle 10.

Furthermore, the present embodiment comprises a high-permeability radio transmission and reception system 9C. In particular, the radio transceiver system adopts a Long Range (LoRa) protocol. Nothing prevents adopting a different protocol suitable for the purpose. The high permeability allows additional operations of the apparatus 1, for example the reading of apparatuses inside houses while carrying out the collection, as further function of the fleet. In such a case, during the waste collection along the paths assigned thereto, the vehicles 10 of the fleet may proceed to read the other data, such as the data relating to the water, light and gas consumptions of the houses situated close to such paths.

The apparatus 1 according to the invention possibly also provides an expansion slot. It is thereby possible to provide the implementation of additional functionalities and update function for the apparatus 1. It is therefore possible to personalize the apparatus 1 based on specific requirements, and quick obsolescence problems of the adopted systems because of the steep technological evolution curve of the sector are avoided.

The apparatus 1 preferably also provides a connection port (not shown) with an alarm sensor 11, preferably in form of a button, activatable by the operator of the vehicle 10, for signalling an alarm condition and providing an immediate response by means of the reception central station.

An example of operation of the apparatus 1 according to the invention is depicted in Figure 3, in particular, a malfunction case of the equipment 3 of a vehicle 10 is taken into consideration. The sending of all data concerning both the vehicle 10 and the equipment 3 in a unique coherent data with the information crossed thanks to the different systems in the apparatus 1 allows detecting the problem by means of the reception central station. After detecting the problem, if it is simple to solve, it is possible to communicate directly with the operator for a direct intervention thereof or to show the responsible technician where to intervene for a quick solution and a quick recovery of the service.

The term "coherent data" means the set of data which are detected at the same time and interconnected between the structure-side interface system 5, the load-side interface system 6 and the system of automatic identification and storage of object information 7, which are comprised in the apparatus 1, in addition to positioning data obtained through the geolocation system 4. Conveniently, the coherent data con be conveniently standardized in its structure, so as to allow a reading and a univocal interpretation.

In the preferred embodiment of the present invention, such a coherent data comprises information of carried-out waste collection, weight on board and position of the vehicle 10, operation of the work equipment 3 thereof and steady operation of the apparatus 1 and the vehicle 10.

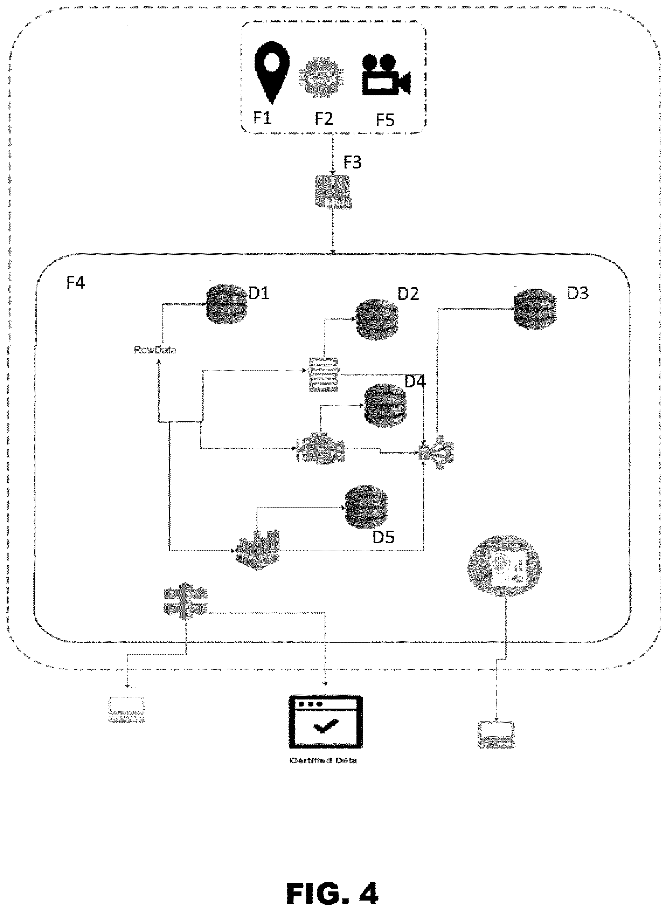

The method for a vehicle fleet management according to the present invention is described below with particular reference to Figure 4. Such a method may be implemented on board each vehicle 10 of the fleet thanks to the above-described apparatus 1.

First, the method comprises a step F1 of, in particular continuously, locating the position of each of the vehicles 10 comprised in the fleet through geolocation systems 4 on board such vehicles 10.

The method therefore comprises a step F2 of identifying an operating state of the vehicle 10 by comparing it with a plurality of expected operating states for the operation thereof. The expected operating states each are identified through data interconnected between structure-side interface system 5, load-side interface system 6 and system of automatic identification and storage of object information 7, which are comprised in the apparatus 1 on board the vehicle 10. A coherent data is therefore generated based on the detected operating state.

Such a coherent data is sent through the network connectivity system 8 in a further step F3 of sending data of the method.

The method therefore comprises a further step F4 of analysing the coherent data through convenient crossed references. In particular, in the present embodiment, the step F4 of analysing comprises a step F41 of verifying the current operating state of each vehicle 10 compared to a planned steady state. It is thereby possible to determine altered operations or malfunctions of the vehicles 10 of the fleet.

Furthermore, in the present embodiment, the step F4 of analysing the coherent data comprises a step F42 of acquiring and analysing a driving style of the driving operator of the vehicle 10.

In the present embodiment, the method further comprises a step F5 of automatically sending a video of internal conditions and external conditions of the vehicle 10. Such a video is detected by an image and video capture system 13, preferably in case of detecting an unsteady condition of the vehicle 10. As mentioned above, this step F5 of automatically sending allows obtaining a more reactive response by means of the reception central station for solving the occurred drawback.

Furthermore, in the present embodiment, the method for a vehicle fleet management comprises a step of storing the coherent data on Cloud.

In one embodiment, the coherent data is sent through a Message Queue Telemetry Transport (MQTT) protocol, a standard ISO lightweight messaging protocol of the type publish-subscribe used in situations where a low impact is required and the band is limited. It is obviously possible to adopt other protocols suitable for the purpose.

Preferably, the Cloud architecture in the present embodiment comprises different databases interconnected with each other through crossed reference tags and in particular:
- a first database D1 wherein the data as output by the vehicles 10, the so-called "raw data", are stored and are available to a certification body, so as to guarantee the absence of intermediate steps and raw data changes which may compromise or alter the truthfulness of the data themselves;
- a second database D2 wherein data concerning the structure-side interface system 5 are stored and reprocessed;
- a third database D3 wherein data concerning the load-side interface system 6 are stored and reprocessed;
- a fourth database D4 wherein data relating to the results of a predictive diagnostic analysis are stored.

As above mentioned, such databases may be identified through simple tags because of the uniqueness of the data type stored therein.

It is underlined that the data subdivision in the plurality of databases of the Cloud architecture according to the present embodiment is preferred for guaranteeing a greater convenience of data management and a greater data safety compared to what would happen while using a single database. Obviously, this is a non-limiting form of the invention and it is possible to adopt different solutions by structuring the used Cloud architecture in a different way.

It is also possible to provide a further database D5 for storing the video data obtained through the image and video capture system 13.

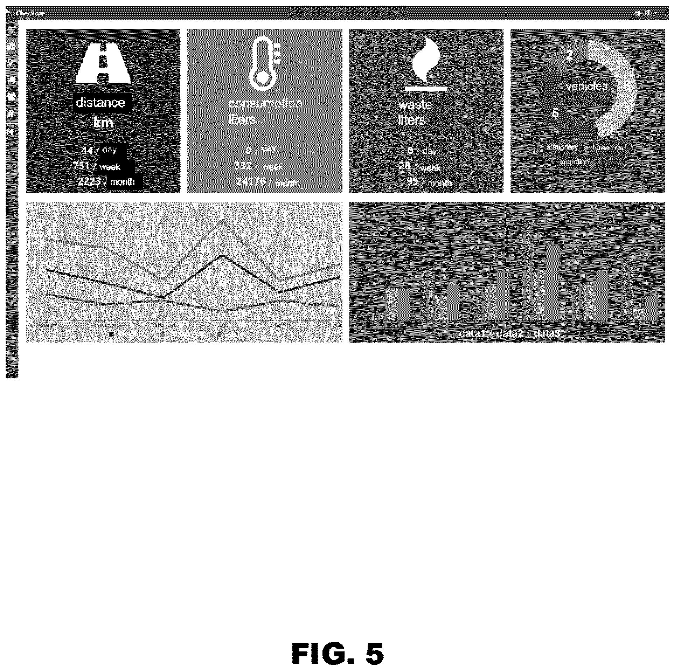

An example of the graphical output gettable from the coherent data sent by the apparatus 1 is shown in Figure 5.

As can be seen in such a figure, the coherent data keep track of every information concerning the vehicle 10 and the equipment 3, the position, time and travel information. Through such information, it is always possible to determine the operating conditions of the fleet of vehicles 10, control the operators responsible for the fleet and carry out optimization analyses of the paths also based on additional information, such as for example information concerning the traffic conditions on the different paths and/or at certain times of the day.

Advantageously, the present invention allows therefore having a complete overview on the operation of each vehicle of the fleet under all conditions.

Thanks to the characteristics of the proposed apparatus and method for a vehicle fleet management, it is possible to obtain a complete integration between every information concerning each vehicle of the fleet, through crossing data from all systems on board the vehicle and through univocally sending a coherent data which combines all available information, such a data may be also conveniently standardized in its structure, so as to allow an univocal reading.

Furthermore, it is possible to have a complete traceability by crossing data from the geolocation system with the identification system on board such a vehicle, since there is not only information regarding the position of a vehicle but also its actual carrying out of the service. An operator of a vehicle may signal an alarm condition by simply pressing on a suitable button conveniently connected to the apparatus according to the present invention, thus allowing an immediate intervention for solving any problems.

Further advantageously, thanks to the complete overview given by the information got from the single or combined coherent data, it is possible to carry out a real-time or ex-post analysis for optimizing paths and consumptions of the vehicles of the fleet.

Further advantage is the possibility to send a complete and clean data to the responsible certification body, for verifying the proper carrying out of the service.

Further advantage is the possibility to update the apparatus or to implement new functionalities through suitable expansions slots, which allow a functionality at maximum performances for an economically satisfactory time.

Advantageously, the use of a fourth generation (4G) technology for the network connectivity system allows sending images on a video streaming with a real-time control of the internal and external conditions of the vehicles of the fleet.

Further advantageously, the use of expansion slots allows a possible implementation of the system to network connectivity technologies with even higher signal power, so as to also provide, for example, autonomous driving systems, while maintaining the overall structure of the device, which does not need to be replaced, unchanged.

It is further advantageous that the present architecture may be applied in other fields and public services through small changes regarding the information to be detected.

Further advantage is finally the possibility to integrate the architecture according to the present invention on the existing fleets for waste collection in a relatively simple way, without the need for substantial interventions of mechanical implementation.

It will be apparent to the skilled person that the shown embodiment may be subjected to various changes and variations, according to specific and contingent needs, all of them comprised in the scope of protection of the invention, as define by the following claims.

## Claims

1. Apparatus (1) for managing a fleet of vehicles (10), each vehicle (10) comprising at least one work equipment (3), said apparatus (1) being on board a vehicle (10) of said fleet and comprising
- a geolocation system (4), for detecting the position of said vehicle (10);
- a structure-side interface system (5) connected to said vehicle (10), for monitoring the activity of said vehicle (10);
- a load-side interface system (6) connected to said equipment (3), for monitoring the activity of said equipment (3) of said vehicle (10);
- a system of automatic identification and storage of object information (7), for detecting and identifying objects by means of said apparatus (1); and
- a network connectivity system (8) to allow data to be transmitted from said apparatus (1);
**characterized in that**
said structure-side interface system (5) is connected to said load-side interface system (6), geolocation system (4) and system of automatic identification and storage of object information (7), for generating a coherent data identifying an operating state of said vehicle (10), wherein coherent data means a set of data which are detected at the same time and interconnected between said structure-side interface system (5), said load-side interface system (6) and said system of automatic identification and storage of object information (7), which are comprised in said apparatus (1), in addition to positioning data obtained through said geolocation system (4), and **in that** said coherent data is sent through said network connectivity system (8).

2. Apparatus (1) for a fleet management according to claim 1, wherein said fleet of vehicles (10) is designed for an environmental hygiene management, and wherein said work equipment (3) comprises handling and manoeuvring means for waste collection.

3. Apparatus (1) for a fleet management according to claim 2, wherein said coherent data comprises information of occurred collection of said waste, of on-board weight and of position of said vehicle (10), of operation of said work equipment (3) and of steady operation of said apparatus (1) and of said vehicle (10).

4. Apparatus (1) for a fleet management according to claim 1, wherein said system of automatic identification and storage of object information (7) is selected from a system with a radiofrequency identification (RFID) one-way technology comprising tags detected through suitable readers and a system with a near field communication (NFC) two-way technology comprising a peer-to-peer network.

5. Apparatus (1) for a fleet management according to claim 1, further comprising a data transmission system (9), preferably selected from a system of the Wi-Fi type and a system of the Bluetooth type.

6. Apparatus (1) for a fleet management according to claim 1, further comprising expansion slots to allow additional functionalities and update functions for said apparatus (1) to be implemented.

7. Apparatus (1) for a fleet management according to claim 1, wherein said geolocation system (4) is interfaced with an accelerometer of said vehicle (10) for detecting a path under an estimated navigation condition.

8. Apparatus (1) for a fleet management according to claim 1, wherein said structure-side interface system (5) carries out a data reading through a protocol selected from a Fieldbus Message Specification (FMS) protocol and a European On-Board Diagnostic (EOBD) auto-diagnostic protocol.

9. Apparatus (1) for a fleet management according to claim 1, wherein said network connectivity system (8) is a system with a fourth generation (4G) standard and related Narrow band implementation.

10. Apparatus (1) for a fleet management according to claim 1, further comprising an artificial neural network (12) adapted to assimilate data concerning a driving style of each driving operator of said vehicles (10) of said fleet.

11. Apparatus (1) for a fleet management according to any one of the preceding claims, further comprising an image and video capture system (13) of external conditions and internal conditions of said vehicle (10) of said fleet.

12. Apparatus (1) for a fleet management according to claim 5, wherein said data transmission system (9) further comprises a high-permeability radio transmission and reception system (9C) which preferably adopts a Long Range (LoRa) protocol.

13. Apparatus (1) for a fleet management according to claim 5, wherein said data transmission system (9) further comprises a Wi-Fi data transmission system (9A) for sending medium-range information and a Bluetooth data transmission system (9B) for sending short-range information.

14. Apparatus (1) for a fleet management according to any one of the preceding claims, further comprising a connection port with an alarm sensor (11) activatable by an operator adapted to send an alarm condition to a central station.

15. Method for managing a fleet of vehicles (10) comprising a work equipment (3), comprising the following steps:
- locating the position of each of said vehicles (10), through a geolocation system (4) on board said vehicles (10);
- identifying an operating state of said vehicle (10) between a plurality of expected operating states, through a structure-side interface system (5) connected to a load-side interface system (6) and a system of automatic identification and storage of object information (7) on board said vehicles (10);
- generating a coded coherent data for said operating state, wherein coherent data means a set of data which are detected at the same time and interconnected between said structure-side interface system (5), said load-side interface system (6) and said system of automatic identification and storage of object information (7), which are comprised in said apparatus (1), in addition to positioning data obtained through said geolocation system (4);
- sending said coded coherent data through a network connectivity system (8).

16. Method for a fleet management according to claim 15, further comprising one or more of the following steps:
a step of verifying said operating state compared to a planned steady operating state adapted to determine altered operations or malfunctions of said vehicle (10);
a step of acquiring and analysing a driving style of a driving operator of said vehicle (10);
a step of automatically sending a video of external conditions and internal conditions of said vehicle detected by an image and video capture system (13), in case of detection of an unsteady condition of said vehicle (10);
a step of storing said coherent data on Cloud.
